(19) Europäisches Patentamt
European Patent Office
Office européen des brevets

(11) **EP 3 828 962 B1**

(12) **EUROPEAN PATENT SPECIFICATION**

(45) Date of publication and mention
of the grant of the patent:
**22.10.2025  Bulletin 2025/43**

(51) International Patent Classification (IPC):
*H01M 4/133* (2010.01)    *H01M 4/36* (2006.01)
*H01M 4/38* (2006.01)    *H01M 4/48* (2010.01)
*H01M 4/587* (2010.01)    *H01M 4/62* (2006.01)
*H01M 10/0569* (2010.01)

(21) Application number: **19839821.6**

(22) Date of filing: **18.03.2019**

(52) Cooperative Patent Classification (CPC):
**H01M 4/364; H01M 4/133; H01M 4/366;
H01M 4/386; H01M 4/587;** B82Y 30/00;
H01M 4/0404; H01M 10/0569; Y02E 60/10

(86) International application number:
**PCT/JP2019/011055**

(87) International publication number:
**WO 2020/021763 (30.01.2020 Gazette 2020/05)**

(54) **NEGATIVE ELECTRODE FOR NONAQUEOUS ELECTROLYTE SECONDARY BATTERY AND NONAQUEOUS ELECTROLYTE SECONDARY BATTERY**

NEGATIVELEKTRODE FÜR SEKUNDÄRBATTERIE MIT WASSERFREIEM ELEKTROLYT UND SEKUNDÄRBATTERIE MIT WASSERFREIEM ELEKTROLYT

ÉLECTRODE NÉGATIVE POUR BATTERIE SECONDAIRE À ÉLECTROLYTE NON AQUEUX ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.07.2018  JP 2018138937**

(43) Date of publication of application:
**02.06.2021  Bulletin 2021/22**

(73) Proprietor: **Panasonic Intellectual Property Management Co., Ltd.**
**Osaka-shi, Osaka 540-6207 (JP)**

(72) Inventors:
• **MATSUO, Yuta**
**Osaka-shi, Osaka 540-6207 (JP)**
• **ISHIKAWA, Kaori**
**Osaka-shi, Osaka 540-6207 (JP)**
• **ITO, Daisuke**
**Osaka-shi, Osaka 540-6207 (JP)**
• **KURAMOTO, Mamoru**
**Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(56) References cited:
EP-A1- 2 915 204    WO-A1-2018/179817
WO-A1-2018/179817    WO-A1-2020/021763
WO-A1-2020/137321    JP-A- 2007 214 038
JP-A- 2010 165 471    JP-A- 2015 511 389
JP-A- 2015 537 347    JP-A- 2017 062 911

EP 3 828 962 B1

**Description**

TECHNICAL FIELD

The present disclosure relates to a negative electrode for a non-aqueous electrolyte secondary battery, and a non-aqueous electrolyte secondary battery.

BACKGROUND ART

It is known that a Si-containing compound can intercalate a larger amount of lithium ions per unit volume than a carbon-based active material such as graphite. For example, PATENT LITERATURE 1 discloses a negative electrode for a non-aqueous electrolyte secondary battery, comprising a negative electrode mixture layer containing a Si-containing compound and graphite each as a negative electrode active material. On the negative electrode disclosed in PATENT LITERATURE 1, a carbon-containing layer containing carbon and a binder is formed on the surface of the negative electrode mixture layer on the side facing a positive electrode, the carbon-containing layer having a thickness of 10% or less of the thickness of the negative electrode mixture layer.

CITATION LIST

PATENT LITERATURE

PATENT LITERATURE 1: Japanese Unexamined Patent Application Publication No. 2012-3997

SUMMARY

In the negative electrode including a Si-based active material, deterioration in charging/discharging cycle characteristics is liable to cause a problem. It can be considered that the main cause of this is in that the extent of contact between particles of the negative electrode active material is weakened, or the contact state is lost by a large change in the volume of the Si-based active material accompanying charging and discharging, so that negative electrode active material particles which are isolated from conductive paths in the negative electrode mixture layer increase. To suppress such isolation of the negative electrode active material (Si-based active material), measures such as an increase in the amount of the binder and addition of a conductive agent are conceivable, but in these cases, a defect such as, for example, deterioration in input characteristics of a battery, or deterioration in storage characteristics of a battery is assumed.

It is an advantage of the present disclosure to provide a negative electrode for a non-aqueous electrolyte secondary battery, the negative electrode being a high-capacity negative electrode including a Si-based active material and being such that the input characteristics, cyclic characteristics, and high-temperature storage characteristics of a non-aqueous electrolyte secondary battery may be improved.

The negative electrode for a non-aqueous electrolyte secondary battery that is one aspect of the present disclosure comprises: a negative electrode current collector; and a negative electrode mixture layer formed on the negative electrode current collector. The negative electrode mixture layer has: a first layer formed on the negative electrode current collector, the first layer including a first carbon-based active material, a Si-based active material, polyacrylic acid or a salt thereof, and fibrous carbon; and a second layer formed on the first layer, the second layer including a second carbon-based active material having a higher tap density than the first carbon-based active material.

A non-aqueous electrolyte secondary battery that is one aspect of the present disclosure comprises: the negative electrode for a non-aqueous electrolyte secondary battery; a positive electrode; and a non-aqueous electrolyte.

According to the negative electrode for a non-aqueous electrolyte secondary battery of the present disclosure, a non-aqueous electrolyte secondary battery that is excellent in input characteristics, cyclic characteristics, and high-temperature storage characteristics while the capacity is enhanced by using a Si-based active material may be provided.

BRIEF DESCRIPTION OF DRAWING

FIG. 1 is a perspective view showing a non-aqueous electrolyte secondary battery as one exemplary embodiment.
FIG. 2 is a sectional view of a negative electrode as one exemplary embodiment.

DESCRIPTION OF EMBODIMENTS

As described above, it is an important issue to realize satisfactory input characteristics, cyclic characteristics, and high-temperature storage characteristics in a non-aqueous electrolyte secondary battery using a high-capacity negative electrode including a Si-based active material. However, when the amount of a binder in a negative electrode mixture layer is increased in order to improve the cyclic characteristics, the input characteristics are generally deteriorated. When a conductive agent is added to the negative electrode mixture layer in order to improve the cyclic characteristics, the storage characteristics are generally deteriorated. Alternatively, when a carbon-based active material in which the insertion rate of lithium ions is high is used in order to improve the input characteristics, for example, negative electrode active material particles which are isolated from conductive paths increase, so that the cyclic characteristics are deteriorated. Thus it is not easy to improve all of the battery performance described above.

The present inventors have conducted diligent studies in order to solve the problem to succeed in realizing satisfactory input characteristics, cyclic characteristics, and high-temperature storage characteristics by making a negative electrode mixture layer into a double-layered structure having the first layer and the second layer. Hereinafter, embodiments of a negative electrode for a non-aqueous electrolyte secondary battery and a non-aqueous electrolyte secondary battery of the present disclosure will be described in detail with reference to the drawings.

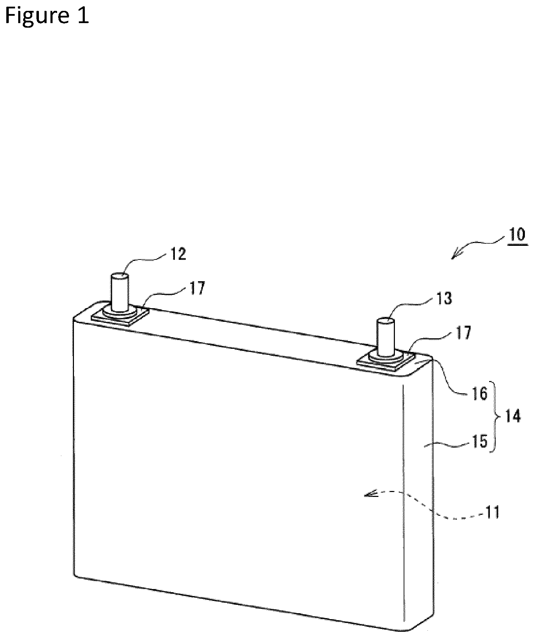

FIG. 1 is a perspective view showing a non-aqueous electrolyte secondary battery 10 as one exemplary embodiment. The non-aqueous electrolyte secondary battery 10 shown in FIG. 1 as an example is a rectangular-shaped battery, but the non-aqueous electrolyte secondary battery of the present disclosure is not limited to this, and may be a cylindrically shaped battery comprising a cylindrically shaped battery case, a laminate battery comprising an exterior body formed of a laminate film including a metal layer, or the like. The expression "numerical value (1) to numerical value (2)" as used herein means numerical value (1) or more and numerical value (2) or less.

As shown in FIG. 1 as an example, the non-aqueous electrolyte secondary battery 10 comprises: an electrode assembly 11; a non-aqueous electrolyte; and a rectangular-shaped battery case 14 that houses these. The electrode assembly 11 has a positive electrode, a negative electrode, and a separator. The electrode assembly 11 is a lamination type electrode assembly in which positive electrodes and negative electrodes are alternately laminated one by one with separators interposed therebetween. The electrode assembly is not limited to this, and may be a wound type electrode assembly in which a long positive electrode and a long negative electrode are wound together with a separator interposed therebetween.

The battery case 14 has: a case body 15 having an approximately box shape; a sealing assembly 16 that closes an opening of the case body 15; a positive electrode terminal 12 electrically connected to the positive electrode; and a negative electrode terminal 13 electrically connected to the negative electrode. The case body 15 and the sealing assembly 16 are formed of, for example, a metal material containing aluminum as a main component. The positive electrode terminal 12 and the negative electrode terminal 13 are fixed to the sealing assembly 16 through an insulating member 17. The sealing assembly 16 is generally provided with a gas discharge mechanism (not shown).

Hereinafter, the positive electrode, the negative electrode, the separator, and the non-aqueous electrolyte included in the non-aqueous electrolyte secondary battery 10, particularly negative electrode, will be described in detail.

[Positive Electrode]

The positive electrode comprises: a positive electrode current collector; and a positive electrode mixture layer formed on the positive electrode current collector. Foil of a metal, such as aluminum or an aluminum alloy, that is stable in the electric potential range of the positive electrode, a film with such a metal disposed on an outer layer, and the like can be used for the positive electrode current collector. The positive electrode mixture layer includes, for example, a positive electrode active material, a binder, and a conductive agent. The positive electrode mixture layer is preferably formed on each side of the positive electrode current collector. The positive electrode can be produced by, for example, applying a positive electrode mixture slurry including the positive electrode active material, the binder, the conductive agent, and the like on the positive electrode current collector, and drying and rolling the resultant coating film, thereby forming the positive electrode mixture layer on each side of the positive electrode current collector.

The positive electrode active material contains a lithium-containing metal composite oxide as a main component. Examples of the metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, Ca, Sb, Pb, Bi, and Ge. One example of suitable lithium-containing metal composite oxides is a composite oxide containing at least one of Ni, Co, Mn, and Al.

Examples of the conductive agent included in the positive electrode mixture layer include carbon materials such as carbon black, acetylene black, Ketjenblack, and graphite. Examples of the binder included in the positive electrode mixture layer include fluoroplastics such as polytetrafluoroethylene (PTFE) and polyvinylidene fluoride (PVDF), polyacrylonitrile (PAN), polyimides, acrylic resins, and polyolefins. These resins may be combined with carboxymethyl cellulose (CMC) or a salt thereof, polyethylene oxide (PEO), or the like.

[Negative Electrode]

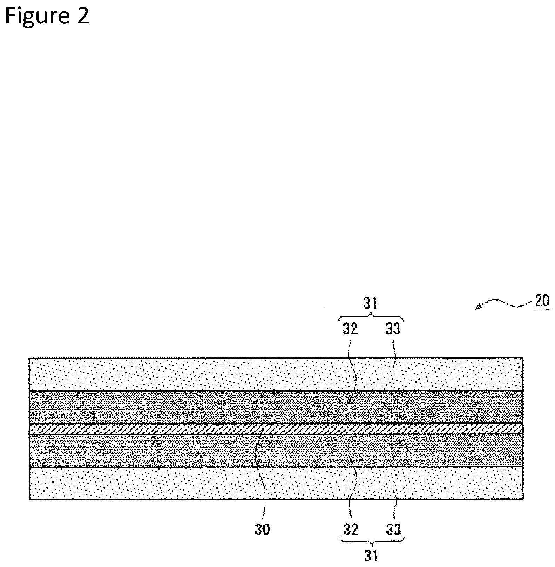

FIG. 2 is a sectional view of a negative electrode 20 as one exemplary embodiment. As shown in FIG. 2 as an example, the negative electrode 20 comprises: a negative electrode current collector 30; and a negative electrode mixture layer 31 formed on the negative electrode current collector 30. Foil of a metal, such as copper or a copper alloy, that is stable in the electric potential range of the negative electrode, a film with such a metal disposed on an outer layer, and the like can be used for the negative electrode current collector 30. The negative electrode mixture layer 31 is preferably formed on each side of the negative electrode current collector 30. The negative electrode 20 can be produced by, for example, applying a negative electrode mixture slurry including the negative electrode active material, the binder, and the like on the negative electrode current collector 30, and drying and rolling the resultant coating film, thereby forming the negative electrode mixture layer 31 on each side of the negative electrode current collector 30.

The negative electrode mixture layer 31 has a double-layered structure composed of a first layer 32 formed on the negative electrode current collector 30 and a second layer 33 formed on the first layer 32. The first layer 32 is a layer (lower layer) including a first carbon-based active material, a Si-based active material, polyacrylic acid or a salt thereof, and fibrous carbon. The second layer 33 is a layer (upper layer) including a second carbon-based active material. The second layer 33 is a layer having a lower content rate of the Si-based active material than the first layer 32, or a layer substantially free of the Si-based active material. Preferably, the second layer 33 contains only the carbon-based active material as a negative electrode active material and is substantially free of the Si-based active material (for example, less than 0.1% by mass based on the mass of the second layer 33) from the viewpoint of an improvement in the input characteristics of a battery, and the like.

The tap density of the second carbon-based active material included in the second layer 33 is higher than the tap density of the first carbon-based active material included in the first layer 32. When the total amounts of the respective carbon-based active materials included in the first layer 32 and the second layer 33 are compared, the tap density of the second carbon-based active material may be higher than the tap density of the first carbon-based active material.

The mass of the first layer 32 is 50% by mass or more and less than 90% by mass, and preferably 50% by mass to 70% by mass based on the mass of the negative electrode mixture layer 31. The mass of the second layer 33 is more than 10% by mass and 50% by mass or less, and preferably 30% by mass to 50% by mass based on the mass of the negative electrode mixture layer 31. In short, the mass ratio of the first layer 32 to the second layer 33 (the second layer 33/the first layer 32) is more than 0.1 and 0.5 or less, and preferably 0.3 to 0.5.

When the mass of the first layer 32 based on the mass of the negative electrode mixture layer 31 is 90% by mass or more, and the mass of the second layer 33 based on the mass of the negative electrode mixture layer 31 is 10% by mass or less, the proportion of the second layer 33 that contributes to, for example, an improvement in the input characteristics is small, and the input characteristics of a battery is deteriorated. When the mass of the first layer 32 based on the mass of the negative electrode mixture layer 31 is less than 50% by mass, and the mass of the second layer 33 based on the mass of the negative electrode mixture layer 31 is more than 50% by mass, the proportion of the first layer 32 is small (that is, the amount of the Si-based active material is reduced), and it is difficult to enhance the capacity of a battery.

The filling density of the negative electrode mixture layer 31 is preferably $1.65\,g/cm^3$ or more in terms of improving the battery capacity, and the like. The filling density of the negative electrode mixture layer 31 is, for example, $1.65\,g/cm^3$ to $1.75\,g/cm^3$. The filling densities of the first layer 32 and the second layer 33 may be the same with or different from each other. The filling density of the second layer 33 is, for example, lower than the filling density of the first layer 32. One example of the filling density of the second layer 33 is $1.40\,g/cm^3$ to $1.55\,g/cm^3$. One example of the filling density of the first layer 32 is $1.70\,g/cm^3$ to $1.95\,g/cm^3$.

The thickness of the negative electrode mixture layer 31 is, for example, 30 $\mu$m-100 $\mu$m, or 50 $\mu$m-80 $\mu$m on the one side of the negative electrode current collector 30. The thicknesses of the first layer 32 and the second layer 33 may be the same with or different from each other as long as the mass ratio is satisfied. The thickness of the first layer 32 may be larger or smaller than the thickness of the second layer 33. A layer other than the first layer 32 and the second layer 33 may be included in the negative electrode mixture layer 31 within a range where the advantage of the present disclosure is not impaired.

For example, graphite, amorphous carbon, or the like is used as the first and the second carbon-based active materials. Among others, graphite is preferable. Examples of the graphite include: natural graphite, such as scale-like graphite; and artificial graphite, such as lump artificial graphite and graphitized mesophase carbon microbeads. An electrically conductive covering layer of amorphous carbon or the like may be formed on the surfaces of graphite particles. One of graphite and the like may be used singly, or two or more graphite and the like may be combined as the first and the second carbon-based active materials.

The first carbon-based active material is preferably an active material that can relax a change in volume of the Si-based active material. On the other hand, the second carbon-based active material is preferably an active material that has high reactivity for receiving lithium ions and contributes to an improvement in the input characteristics. The first carbon-based active material is, for example, softer than the second carbon-based active material and easily crushes when an electrode plate is rolled. In other words, the second carbon-based active material is harder than the first carbon-based active material and is unlike to crush during rolling. Each of the first and the second carbon-based active materials is, for example, graphite having an electrically conductive covering layer of amorphous carbon or the like formed on the surfaces of the particles, and the amount of the covering layer present on the surfaces of the particles of the second carbon-based active material is larger than the amount of the covering layer present on the surfaces of the particles of the first carbon-based active material. There is a tendency that the larger the amount of the covering layer present, the harder the graphite particles are.

The tap density of the second carbon-based active material included in the second layer 33 is preferably higher than the tap density of the first carbon-based active material included in the first layer 32. When the tap density of active material particles is high, the active material particles pack in space more easily, and therefore the extent of contact among the active material particles is large and satisfactory conductive paths are formed, so that the input characteristics of a battery are improved. By using the second carbon-based active material having a high tap density for the second layer 33 in the negative electrode mixture layer 31, migration of lithium ions becomes smooth particularly in the second layer 33 smooth. Thereby, the input characteristics of a battery are improved.

One example of the tap density of the first carbon-based active material is 0.85 $g/cm^3$ to 1.00 $g/cm^3$, and preferably 0.89 $g/cm^3$ to 0.95 $g/cm^3$. The tap density of the second carbon-based active material is, for example, 1.00 $g/cm^3$ or more, and preferably 1.00 $g/cm^3$ to 1.25 $g/cm^3$. The tap density of the carbon-based active materials is measured according to the method specified in JIS Z-2504. In the present specification, the bulk density measured after tapping a sample powder collected in a container 250 times is defined as the tap density.

The BET specific surface area of the second carbon-based active material included in the second layer 33 is preferably higher than the BET specific surface area of the first carbon-based active material included in the first layer 32. When the BET specific surface area of active material particles is large, the reaction area is large, and therefore reactivity for receiving lithium ions is high. By using the second carbon-based active material having a large BET specific surface area for the second layer 33 in the negative electrode mixture layer 31, the input characteristics of a battery are improved. When the BET specific surface area of active material particles is large, the amount of the electrically conductive covering layer present is large to make the particles hard. The first carbon-based active material having a smaller BET specific surface area has, for example, a smaller amount of the electrically conductive covering layer and is softer than the second carbon-based active material. Therefore, the first carbon-based active material can relax the change in volume of the Si-based active material more than the second carbon-based active material.

One example of the BET specific surface area of the first carbon-based active material is 0.9$m^2$/g to 6.5$m^2$/g, and the BET specific surface area of the second carbon-based active material is higher than the BET specific surface area of the first carbon-based active material and is, for example, 2.5 $m^2$/g to 8.0 $m^2$/g. The BET specific surface area is measured according to the BET method (nitrogen adsorption method) described in JIS R1626.

The first and the second carbon-based active materials are generally secondary particles in which a large number of primary particles aggregate. The average particle diameters of the first and the second carbon-based active materials (secondary particles) each are not particularly limited, and are, for example, 1 $\mu$m to 30 $\mu$m. The average particle diameters of the first and the second carbon-based active materials each mean a volume average particle diameter ($D_V$50) at which an integrated volume value reaches 50% in a particle size distribution measured by a laser diffraction scattering method.

In the first layer 32, the Si-based active material, polyacrylic acid (PAA) or the salt thereof, and the fibrous carbon in addition to the first carbon-based active material are included, as described above. PAA and the salt thereof bind particles of the negative electrode active materials (the Si-based active material and the first carbon-based active material) strongly and therefore suppresses an increase in the negative electrode active material particles which are isolated from the conductive paths in the first layer 32, even when the volume of the Si-based active material is greatly changed accompanying charge and discharge. Therefore, by adding PAA or the salt thereof to the first layer 32, deterioration in cyclic characteristics is suppressed. The fibrous carbon as well as PAA or the salt thereof forms satisfactory conductive paths in the first layer 32.

The Si-based active material is at least one of Si and a Si-containing compound, but is preferably a Si-containing compound exhibiting a smaller change in volume during charge and discharge than Si. The Si-containing compound is not particularly limited as long as it is a compound containing Si, but is preferably a compound represented by $SiO_x$ (0.5≤x≤1.5). The Si-containing compound may be used singly, or two or more of the Si-containing compounds may be combined. A conductive coating formed of a material having higher electrical conductivity than the Si-containing compound is preferably formed on the surfaces of the particles of the Si-containing compound. The average particle diameter ($D_V$50) of the Si-containing compound is, for example, 1 $\mu$m to 15 $\mu$m.

$SiO_x$ has a structure in which, for example, Si is dispersed in amorphous $SiO_2$ matrices. $SiO_x$ may include lithium silicate (for example, lithium silicate represented by $Li_{2Z}SiO_{(2+z)}$ (0<z<2)) in the particles, and may have a structure in which Si is dispersed in lithium silicate phases.

The conductive coating is preferably a carbon coating. The carbon coating is formed in an amount of, for example, 0.5% by mass to 10% by mass based on the mass of the $SiO_x$ particles. Examples of a method for forming the carbon coating include a method of mixing coal tar or the like with Si-containing compound particles and subjecting the resultant mixture to a heat treatment, and a chemical vapor deposition method (CVD method) using a hydrocarbon gas or the like. In addition, the carbon coating may be formed by fixing carbon black, Ketjenblack, or the like firmly to the surfaces of the Si-containing compound particles using a binder.

The mass ratio of the first carbon-based active material to the Si-based active material included in the first layer 32 is, for example, 95:5 to 70:30, and preferably 95:5 to 80:20. When the mass ratio is within the range, the change in volume of the Si-based active material can be reduced by the first carbon-based active material while the capacity of a battery is enhanced, thereby making it easy to suppress the deterioration in the cyclic characteristics. In the first layer 32, the proportion of the Si-based active material in the negative electrode active material is preferably 5% by mass to 20% by mass, and more preferably 5% by mass to 15% by mass.

PAA or the salt thereof included in the first layer 32 functions as a binder. The salt of PAA is, for example, a lithium salt, a sodium salt, a potassium salt, or an ammonium salt. The first layer 32 preferably includes a second binder in addition to PAA and the salt thereof. Examples of the second binder include CMC or a salt thereof, a styrene-butadiene copolymer (SBR), polyvinyl alcohol (PVA), and PEO. Among others, CMC or the salt thereof, and SBR are preferable. The first layer 32 includes, for example, PAA or a salt thereof, CMC or a salt thereof, and SBR as the binder.

Examples of the binder included in the second layer 33 include CMC or a salt thereof, SBR, PVA, and PEO. Among others, CMC or the salt thereof, and SBR are preferable. The second layer 33 is a layer having a lower content ratio of PAA or the salt thereof than the first layer 32, or a layer substantially free of PAA or the salt thereof. Preferably, the second layer 33 is substantially free of PAA or the salt thereof (for example, less than 0.1% by mass based on the mass of the binder included in the second layer 33) in view of the input characteristics of a battery. That is, PAA or the salt thereof is preferably included only in the first layer 32. The second layer 33 includes, for example, CMC or the salt thereof, and SBR as the binder.

The content of the binder included in the first layer 32 is preferably higher than the content of the binder included in the second layer 33. In this case, it is easy to improve the input characteristics while the deterioration in the cyclic characteristics of a battery is suppressed. The content of the binder included in the first layer 32 is, for example, preferably 0.5% by mass to 10% by mass, and more preferably 1% by mass to 5% by mass based on the mass of the first layer 32. The content of PAA or the salt thereof is preferably 20% by mass or more and is, for example, 20% by mass to 50% by mass based on the binder in the first layer 32 from the viewpoint of suppression of the deterioration in the cyclic characteristics, and the like. The content of the binder included in the second layer 33 is, for example, preferably 0.5% by mass to 10% by mass, and more preferably 1% by mass to 5% by mass based on the mass of the second layer 33.

The fibrous carbon included in the first layer 32 functions as a conductive agent to form satisfactory conductive paths in the first layer 32. The conductive paths which are formed by the fibrous carbon are unlikely to be cut even when the volume of the Si-based active material is changed greatly by charge and discharge. The fibrous carbon is, for example, a carbon material having an aspect ratio of 60 or more and has a size with which the carbon material can be added to the first layer 32. The second layer 33 is a layer having a lower content ratio of the fibrous carbon than the first layer 32, or a layer substantially free of the fibrous carbon. Preferably, the second layer 33 is substantially free of the fibrous carbon (for example, less than 0.001% by mass based on the mass of the second layer 33) in view of the storage characteristics of a battery. That is, the fibrous carbon is preferably included only in the first layer 32.

Examples of the fibrous carbon include a carbon nanotube (CNT) and a carbon nanofiber. CNT may be not only single-layered CNT but also double-layered CNT and multi-layered CNT, and a mixture thereof. CNT may also be a vapor-grown carbon fiber called VGCF (R). The fibrous carbon has, for example, a diameter of 2 nm to 20 μm and a total length of 0.03 μm to 500 μm. The content of the fibrous carbon is, for example, preferably 0.01% by mass to 5% by mass, and more preferably 0.5% by mass to 3% by mass based on the mass of the first layer 32.

The negative electrode 20 is produced by, for example, the following method. A first negative electrode mixture slurry for the first layer 32, the slurry including: the first carbon-based active material; the Si-based active material; the binder including PAA or the salt thereof; the fibrous carbon; and the like, is prepared. A second negative electrode mixture slurry for the second layer 33, the slurry including: the second carbon-based active material; the binder; and the like, is prepared. The first negative electrode mixture slurry is applied on the negative electrode current collector 30, and the resultant coating film is dried to form the first layer 32 on the negative electrode current collector 30. Subsequently, the second negative electrode mixture slurry is applied on the first layer 32, the resultant coating film is dried to form the second layer 33 on the first layer 32, and the first layer 32 and the second layer 33 are then compressed. In this manner, the negative electrode 20 such that the negative electrode mixture layer 31 including the first layer 32 and the second layer 33 is formed on the negative electrode current collector 30 is obtained.

[Separator]

An ion-permeable and insulating porous sheet is used as the separator. Specific examples of the porous sheet include a microporous thin film, a woven fabric, and a nonwoven fabric. As the material for the separator, an olefin-based resin such as polyethylene, polypropylene, or a copolymer including at least one of ethylene and propylene, cellulose, or the like is suitable. A separator may have a single-layered structure or a laminated structure. A heat resistant layer or the like may be formed on the surface of the separator.

[Non-aqueous Electrolyte]

The non-aqueous electrolyte includes: a non-aqueous solvent; and an electrolyte salt dissolved in the non-aqueous solvent. The non-aqueous electrolyte is not limited to a liquid electrolyte (non-aqueous electrolytic solution) and may be a solid electrolyte using a gel polymer or the like. As the electrolyte salt, for example, a lithium salt such as $LiBF_4$ or $LiPF_6$, is used. As the non-aqueous solvent, for example, an ester such as ethylene carbonate (EC), propylene carbonate (PC), dimethyl carbonate (DMC), ethyl methyl carbonate (EMC), diethyl carbonate (DEC), or methyl propionate (MP), an ether, a nitrile, an amide, and a mixed solvent of two or more thereof are used. The non-aqueous solvent may contain a halogen-substituted product formed by replacing at least some of the hydrogen atoms of any of the above solvents with a halogen atom such as fluorine.

Examples of the halogen-substituted product include a fluorinated cyclic carbonate ester such as fluoroethylene carbonate (FEC), a fluorinated chain carbonate ester, and a fluorinated chain carboxylate ester such as methyl fluoropropionate (FMP). The non-aqueous electrolyte preferably includes FEC in an amount of 15% by mass or more, and more preferably contains FEC in an amount of 15% by mass to 25% by mass based on the mass of the non-aqueous electrolyte in terms of suppression of deteriorating the charge and discharge cycle characteristics or improvement in the input characteristics or the like, of the non-aqueous electrolyte secondary battery 10.

EXAMPLES

Hereinafter, the present disclosure will further be described with Examples, but the present disclosure is not limited to these Examples.

<Example 1>

[Positive Electrode]

A lithium transition metal oxide represented by $LiNi_{1/3}Co_{1/3}Mn_{1/3}O_2$ was used as a positive electrode active material. A positive electrode mixture slurry was prepared by mixing 94.8 parts by mass of the positive electrode active material, 4 parts by mass of acetylene black, and 1.2 parts by mass of PVDF, and, further, adding an appropriate amount of N-methyl-2-pyrrolidone (NMP). Next, the positive electrode mixture slurry was applied on a positive electrode current collector excluding a part where a lead was to be connected, the positive electrode current collector formed of an aluminum foil, and the resultant coating film was dried. The coating film was rolled using a roller, and then cut into a predetermined electrode size to produce a positive electrode having a positive electrode mixture layer formed on each side of the positive electrode current collector.

[Negative Electrode]

Graphite A having a tap density of 0.92 $g/cm^3$ and a BET specific surface area of 4.2 $m^2/g$ was used as the first carbon-based active material constituting the first layer (lower layer). A first negative electrode mixture slurry for the first layer was prepared by mixing graphite A, $SiO_x$ (x=0.94) having a carbon coating, a lithium salt of PAA, a sodium salt of CMC, CNT, and a dispersion of SBR in a mass ratio of solid contents of 84.5/12/1/1/0.5/1, and adding an appropriate amount of water. In addition, graphite B having a tap density of 1.06 $g/cm^3$ and a BET specific surface area of 4.8 $m^2/g$ was used as the second carbon-based active material constituting the second layer (upper layer). A second negative electrode mixture slurry for the second layer was prepared by mixing graphite B, a sodium salt of CMC, and a dispersion of SBR in a mass ratio of solid contents of 98/1/1, and adding an appropriate amount of water.

Next, the first negative electrode mixture slurry was applied on each side of a negative electrode current collector excluding a part where a lead was to be connected, the negative electrode current collector formed of a copper foil, and the resultant coating film was dried to form the first layer on each side of the negative electrode current collector. Subsequently, the second negative electrode mixture slurry was applied on the first layer formed on each side of the negative electrode current collector, and the resultant coating film was dried to form the second layer. The coating film was rolled using a roller, and was then cut into a predetermined electrode size to produce a negative electrode having a negative electrode mixture layer formed on each side of the negative electrode current collector, the negative electrode mixture layer including the first layer and the second layer.

The masses of the first layer and the second layer in the negative electrode mixture layer were measured to find that the mass ratio of the second layer/the first layer was 1.0. In addition, the filling density of the negative electrode mixture layer was 1.65 g/cm$^3$.

[Non-aqueous Electrolyte]

To a mixed solvent obtained by mixing ethylene carbonate (EC), fluorinated ethylene carbonate (FEC), and diethyl carbonate (DEC) in a volume ratio of 27:3:70, 1% by mass of vinylene carbonate (VC) was added, and LiPF$_6$ was dissolved in a proportion of 1.2 mol/L in the resultant solution to prepare a non-aqueous electrolyte.

[Test Cell]

A lead was attached to each of the negative electrode and the positive electrode, and a lamination type electrode assembly in which the respective electrodes are alternately laminated one by one with separators interposed therebetween was produced. A single-layered polypropylene separator was used as the separator. The produced electrode assembly was inserted in an exterior body formed of an aluminum laminate sheet and was vacuum-dried at 105°C for 2 hours and 30 minutes, the non-aqueous electrolyte was then injected therein, and an opening of the exterior body was sealed to produce a test cell (laminate cell). The design capacity of the test cell is 640 mAh.

<Example 2>

A test cell was produced in the same manner as in Example 1, except that graphite A, SiO$_x$ (x=0.94) having a carbon coating, the lithium salt of PAA, the sodium salt of CMC, CNT, and the dispersion of SBR were mixed in a mass ratio of solid contents of 87.5/9/1/1/0.5/1 in the preparation of the first negative electrode mixture slurry and that the first and the second mixture slurries were applied in such a way that the mass ratio of the second layer/the first layer was 0.33 in the production of the negative electrode. The filling density of the negative electrode mixture layer was 1.65 g/cm$^3$.

<Comparative Example 1>

A test cell was produced in the same manner as in Example 1, except that a negative electrode mixture layer having a single-layered structure was formed on each side of the negative electrode current collector using a negative electrode mixture slurry prepared by mixing graphite A, SiO$_x$ (x=0.94) having a carbon coating, the lithium salt of PAA, the sodium salt of CMC, and the dispersion of SBR in a mass ratio of solid contents of 91/6/1/1/1 and adding an appropriate amount of water in the production of the negative electrode.

<Comparative Example 2>

A test cell was produced in the same manner as in Comparative Example 1, except that graphite A, SiO$_x$ (x=0.94) having a carbon coating, the lithium salt of PAA, the sodium salt of CMC, CNT, and the dispersion of SBR were mixed in a mass ratio of solid contents of 90.5/6/1/1/0.5/1 in the preparation of the negative electrode mixture slurry.
Performance of each test cell described above was evaluated by the following methods. Table 1 shows the evaluation results together with the structures of the negative electrodes.

[Evaluation of Initial Charging/Discharging Efficiency]

In a temperature environment of 25°C, the test cell was charged at a constant current of 0.5 It until the battery voltage reached to 4.3 V, and then at a constant voltage of 4.3 V until the current reached to 1/50 It. Thereafter, the test cell was constant-current discharged at a constant current of 0.5 It until the battery voltage reached to 2.5 V. The initial charging/discharging efficiency was determined from the charge capacity and the discharge capacity. The initial charging/discharging efficiency shown in Table 1 is a relative value obtained using the charging/discharging efficiency of the test cell of Example 1 as a standard (100).

[Evaluation of Capacity Retention Ratio]

In a temperature environment of 25°C, the test cells was charged at a constant current of 0.5 It until the battery voltage reached to 4.3 V, and then carried out at a constant voltage of 4.3 V until the current reached to 1/50 It. Thereafter, the test cell was constant-current discharged at a constant current of 0.5 It until the battery voltage reached to 3.0 V. This charging/discharging was carried out 200 cycles to determine the capacity retention ratio in the charging/discharging cycles based on the following equation. The capacity retention ratio shown in Table 1 is a relative value obtained using the capacity retention ratio of the test cell of Comparative Example 1 as a standard (100).

$$\text{Capacity retention ratio} = (\text{discharge capacity in 200th cycle/discharge capacity in first cycle}) \times 100$$

[Evaluation of Input Characteristics]

In temperature environments of 25°C and -30°C, the test cell was charged at a constant current of 0.5 It until reaching a half of the initial capacity, and the charging was then stopped to leave the test cell to stand for 15 minutes. The voltage after charging at a current of 0.1 It for 10 seconds was measured. Discharging by an amount corresponding to the capacity charged for 10 seconds, measuring the voltage after charging at the next current for 10 seconds, and discharging by an amount corresponding to the capacity charged for 10 seconds were repeated from a current of 0.1 It to 2 It. The electric power (input characteristic) that is necessary for allowing a battery voltage to reach 4.3 V by charging for 10 seconds was determined by calculating a current at which the battery voltage reaches 4.3 V by charging for 10 seconds from the respective measured voltages. Each of the input characteristics shown in Table 1 is a relative value obtained using the necessary electric power of the test cell of Comparative Example 1 as a standard (100). A value higher than 100 shows that the test cell is superior to the test cell of Comparative Example 1 in the input characteristic.

[Evaluation of High-temperature Storage Characteristics]

In a temperature environment of 25°C, the test cell was charged at a constant current of 0.5 It until the battery voltage reached to 4.3 V, and then at a constant voltage of 4.3 V until the current reached to 1/50 It. Thereafter, the test cell was constant-current discharged at a constant current of 0.5 It until the battery voltage reached to 2.5 V (i). Next, in a temperature environment of 25°C, the test cell was charged at a constant current of 0.5 It until the battery voltage reached to 4.3 V, and then at a constant voltage of 4.3 V until the current reached to 1/50 It. A storage test in a temperature environment of 60°C for 20 days was carried out in the charged state. Thereafter, the test cell was constant-current discharged at a constant current of 0.5 It until the battery voltage reached to 2.5 V (ii). Next, in a temperature environment of 25°C, the test cell was charged at a constant current of 0.5 It until the battery voltage reached to 4.3 V, and then at a constant voltage of 4.3 V until the current reached to 1/50 It. Thereafter, the test cell was constant-current discharged at a constant current of 0.5 It until the battery voltage reached to 2.5 V (iii).
The residual capacity and the recovery capacity were determined based on the following equations.
The residual capacity and the recovery capacity shown in Table 1 are relative values obtained using the residual capacity and the recovery capacity of the test cell of Comparative Example 1 as standards (100), respectively.

$$\text{Residual capacity} = (\text{discharge capacity in (ii)/discharge capacity in (i)}) \times 100$$

$$\text{Recovery capacity} = (\text{discharge capacity in (iii)/discharge capacity in (i)}) \times 100$$

[Table 1]

| | Negative electrode mixture layer | Charging /discharging efficiency | Input characteristics | | Capacity retention ratio | Storage characteristics | |
|---|---|---|---|---|---|---|---|
| | | | 25°C | -30°C | | Residual capacity | Recovered capacity |
| Example 1 | Second layer: Graphite B/CMC/SBR First layer: Graphite A/SiO/-PAA/CMC/CNT/SBR Mass ratio: Second layer: First layer =50:50 | 101.5 | 107 | 108 | 101.0 | 100.8 | 100.8 |
| Example 2 | Second layer: Graphite B/CMC/SBR First layer: Graphite A/SiO/-PAA/CMC/CNT/SBR Mass ratio: Second layer: First layer =33:67 | 101.5 | 105 | 104 | 100.5 | 100.0 | 100.0 |
| Comparative example 1 | Single-layered structure Graphite A/SiO/-PAA/CMC/SBR | 100 | 100 | 100 | 100 | 100 | 100 |
| Comparative example 2 | Single-layered structure Graphite A/SiO/-PAA/CMC/CNT/SBR | 99.3 | 103 | 104 | 99.8 | 98.7 | 98.8 |

As can be understood from the evaluation results shown in Table 1, any of the test cells in the Examples is superior to the test cell of Comparative Example 1 in the initial charging/discharging efficiency, the input characteristics, the cyclic characteristics, and the storage characteristics. The test cell of Comparative Example 2 is superior to the test cell of Comparative Example 1 in the input characteristics, but the storage characteristics in particular are greatly deteriorated as compared to the test cell of Comparative Example 1. That is, both of the input characteristics and the storage characteristics cannot be achieved even when fibrous carbon is added to a negative electrode mixture layer having a single-layered structure.

REFERENCE SIGNS LIST

    10 non-aqueous electrolyte secondary battery
    11 electrode assembly
    12 positive electrode terminal
    13 negative electrode terminal
    14 battery case
    15 case body
    16 sealing assembly
    17 insulating member
    20 negative electrode
    30 negative electrode current collector
    31 negative electrode mixture layer
    32 first layer
    33 second layer

**Claims**

1. A negative electrode (20) for a non-aqueous electrolyte secondary battery (10), comprising:

   a negative electrode current collector (30); and
   a negative electrode mixture layer (31) formed on the negative electrode current collector (30),
   **characterized in that** the negative electrode mixture layer (31) comprises:

   a first layer (32) formed on the negative electrode current collector (30), the first layer (32) including a first carbon-based active material, a Si-based active material, polyacrylic acid or a salt thereof, and fibrous carbon; and
   a second layer (33) formed on the first layer (32), the second layer (33) including a second carbon-based active material having a higher tap density than the first carbon-based active material.

2. The negative electrode (20) for a non-aqueous electrolyte secondary battery (10) according to claim 1, wherein the first layer (32) has a mass of 50% by mass or more and less than 90% by mass based on the mass of the negative electrode mixture layer (31), and the second layer (33) has a mass of more than 10% by mass and 50% by mass or less based on the mass of the negative electrode mixture layer (31).

3. The negative electrode (20) for a non-aqueous electrolyte secondary battery (10) according to claim 1 or 2, wherein the first carbon-based active material has a BET specific surface area of 0.9 m$^2$/g to 6.5 m$^2$/g, and the second carbon-based active material has a BET specific surface area of 2.5 m$^2$/g to 8.0 m$^2$/g.

4. The negative electrode (20) for a non-aqueous electrolyte secondary battery (10) according to any one of claims 1 to 3, wherein the first carbon-based active material has a tap density of 0.85 g/cm$^3$ to 1.00 g/cm$^3$.

5. The negative electrode (20) for a non-aqueous electrolyte secondary battery (10) according to any one of claims 1 to 4, wherein the fibrous carbon is a carbon nanotube.

6. The negative electrode (20) for a non-aqueous electrolyte secondary battery (10) according to any one of claims 1 to 5, wherein the negative electrode mixture layer has a filling density of 1.65 g/cm$^3$ or more.

7. A non-aqueous electrolyte secondary battery (10), comprising:

   the negative electrode (20) for a non-aqueous electrolyte secondary battery (10) according to any one of claims 1 to 6;
   a positive electrode; and
   a non-aqueous electrolyte.

8. The non-aqueous electrolyte secondary battery (10) according to claim 7, wherein the non-aqueous electrolyte includes 15% by mass or more of fluoroethylene carbonate.

**Patentansprüche**

1. Negative Elektrode (20) für eine Sekundärbatterie (10) mit wasserfreiem Elektrolyt, umfassend:

   einen Stromkollektor (30) für die negative Elektrode; und
   eine Mischungsschicht (31) für die negative Elektrode, die auf dem Stromkollektor (30) für die negative Elektrode ausgebildet ist,
   **dadurch gekennzeichnet, dass** die Mischungsschickt (31) für die negative Elektrode Folgendes umfasst:

   eine erste Schicht (32), die auf dem Stromkollektor (30) für die negative Elektrode ausgebildet ist, wobei die erste Schicht (32) ein erstes aktives Material auf Kohlenstoffbasis, ein aktives Material auf Si-Basis, Polyacrylsäure oder ein Salz davon und faserförmigen Kohlenstoff enthält; und
   eine zweite Schicht (33), die auf der ersten Schicht (32) ausgebildet ist, wobei die zweite Schicht (33) ein zweites aktives Material auf Kohlenstoffbasis mit einer höheren Klopfdichte als das erste aktive Material auf Kohlenstoffbasis enthält.

2. Negative Elektrode (20) für eine Sekundärbatterie (10) mit wasserfreiem Elektrolyt nach Anspruch 1, wobei die erste Schicht (32) eine Masse von 50 Massenprozent oder mehr und weniger als 90 Massenprozent, bezogen auf die Masse der Mischungsschicht (31) für die negative Elektrode, aufweist und die zweite Schicht (33) eine Masse von mehr als 10 Massenprozent und 50 Massenprozent oder weniger, bezogen auf die Masse der Mischungsschicht (31) für die negative Elektrode, aufweist.

3. Negative Elektrode (20) für eine Sekundärbatterie (10) mit wasserfreien Elektrolyt nach Anspruch 1 oder 2, wobei das erste aktive Material auf Kohlenstoffbasis eine spezifische BET-Oberfläche von 0,9 $m^2$/g bis 6,5 $m^2$/g und das zweite aktive Material auf Kohlenstoffbasis eine spezifische BET-Oberfläche von 2,5 $m^2$/g bis 8,0 $m^2$/g aufweist.

4. Negative Elektrode (20) für eine Sekundärbatterie (10) mit wasserfreien Elektrolyt nach einem der Ansprüche 1 bis 3, wobei das erste aktive Material auf Kohlenstoffbasis eine Klopfdichte von 0,85 g/$cm^3$ bis 1,00 g/$cm^3$ aufweist.

5. Negative Elektrode (20) für eine Sekundärbatterie (10) mit wasserfreiem Elektrolyt nach einem der Ansprüche 1 bis 4, wobei der faserförmige Kohlenstoff ein Kohlenstoff-Nanoröhrchen ist.

6. Negative Elektrode (20) für eine Sekundärbatterie (10) mit wasserfreiem Elektrolyt nach einem der Ansprüche 1 bis 5, wobei die Mischungsschicht für die negative Elektrode eine Fülldichte von 1,65 g/$cm^3$ oder mehr aufweist.

7. Sekundärbatterie (10) mit wasserfreiem Elektrolyt, umfassend:

   die negative Elektrode (20) für eine Sekundärbatterie (10) mit wasserfreiem Elektrolyt nach einem der Ansprüche 1 bis 6;
   eine positive Elektrode; und
   einen wasserfreien Elektrolyt.

8. Sekundärbatterie (10) mit wasserfreiem Elektrolyt nach Anspruch 7, wobei der wasserfreie Elektrolyt 15 Massenprozent oder mehr Fluorethylencarbonat enthält.

## Revendications

1. Electrode négative (20) pour une batterie rechargeable à électrolyte non aqueux (10), comprenant :

   un collecteur de courant d'électrode négative (30) ; et
   une couche de mélange d'électrode négative (31) formée sur le collecteur de courant d'électrode négative (30), **caractérisée en ce que** la couche de mélange d'électrode négative (31) comprend :

   une première couche (32) formée sur le collecteur de courant d'électrode négative (30), la première couche (32) contenant un premier matériau actif à base de carbone, un matériau actif à base de Si, un poly(acide acrylique) ou un sel de celui-ci, et du carbone fibreux ; et
   une deuxième couche (33) formée sur la première couche (32), la deuxième couche (33) contenant un deuxième matériau actif à base de carbone ayant une masse volumique après tassement supérieure à celle du premier matériau actif à base de carbone.

2. Electrode négative (20) pour une batterie rechargeable à électrolyte non aqueux (10) selon la revendication 1, dans laquelle la première couche (32) a une masse de 50 % en masse ou plus et inférieure à 90 % en masse par rapport à la masse de la couche de mélange d'électrode négative (31), et la deuxième couche (33) a une masse de plus de 10 % en masse et 50 % en masse ou moins par rapport à la masse de la couche de mélange d'électrode négative (31).

3. Electrode négative (20) pour une batterie rechargeable à électrolyte non aqueux (10) selon la revendication 1 ou 2, dans laquelle le premier matériau actif à base de carbone a une surface spécifique BET de 0,9 $m^2$/g à 6,5 $m^2$/g, et le deuxième matériau actif à base de carbone a une surface spécifique BET de 2,5 $m^2$/g à 8,0 $m^2$/g.

4. Electrode négative (20) pour une batterie rechargeable à électrolyte non aqueux (10) selon l'une quelconque des revendications 1 à 3, dans laquelle le premier matériau actif à base de carbone a une masse volumique après tassement de 0,85 g/$cm^3$ à 1,00 g/$cm^3$.

**5.** Electrode négative (20) pour une batterie rechargeable à électrolyte non aqueux (10) selon l'une quelconque des revendications 1 à 4, dans laquelle le carbone fibreux est un nanotube de carbone.

**6.** Electrode négative (20) pour une batterie rechargeable à électrolyte non aqueux (10) selon l'une quelconque des revendications 1 à 5, dans laquelle la couche de mélange d'électrode négative a une masse volumique de remplissage de 1,65 g/cm$^3$ ou plus.

**7.** Batterie rechargeable à électrolyte non aqueux (10), comprenant :

l'électrode négative (20) pour une batterie rechargeable à électrolyte non aqueux (10) selon l'une quelconque des revendications 1 à 6 ;
une électrode positive ; et
un électrolyte non aqueux.

**8.** Batterie rechargeable à électrolyte non aqueux (10) selon la revendication 7, dans laquelle l'électrolyte non aqueux contient 15 % en masse ou plus de carbonate de fluoroéthylène.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012003997 A